# EUROPÄISCHE PATENTANMELDUNG

(11) **EP 0 792 896 A2**
(43) Veröffentlichungstag der Anmeldung: **03.09.1997**
(21) Anmeldenummer: 96119497.4
(22) Anmeldetag: 05.12.1996
(51) Int. Cl.: C08G 6/02

(54) **Verfahren zur Abtrennung von Lauge aus Kondensationsharzen**

(30) Priorität: 10.02.1996 DE 19604903
(71) Anmelder: HÜLS AKTIENGESELLSCHAFT, 45764 Marl (DE)
(72) Erfinder: Sridhar, Srinivasan, Dr., 45770 Marl (DE); Diester, Ulrich, 59399 Olfen (DE); Rohde, Christian, 45770 Marl (DE)

(57) **Zusammenfassung**

Bei den herkömmlichen Herstellungsverfahren für Kondensationsharze wird das gewonnene Harz zunächst von einem Lösemittel aufgenommen und die so entstandene organische Phase mit Wasser zur Abtrennung der Lauge extrahiert. Auf diese Weise wird das Harz vom basischen Katalysator frei gewaschen. Die zusätzlichen Verfahrensschritte für Extraktion, Rückgewinnung des Lösemittels und Abwasseraufarbeitung vergrößern den Aufwand erheblich.

Erfindungsgemäß erfolgt die Abtrennung der Lauge aus dem Harz dadurch, daß das Harz in einem mit ionenselektiven Membranen begrenzten Raum einem elektrischen Feld ausgesetzt wird, das die Lauge aus dem Harz abwandern läßt.

Herstellung katalysatorarmer Kondensationsharze.

## Beschreibung

Die Erfindung betrifft ein Verfahren zur Herstellung von katalysatorarmen Kondensationsharzen. Gegenstand der Erfindung ist dabei ein Verfahren zur Abtrennung der als Katalysator eingesetzten Lauge aus den Kondensationsharzen.

Die Herstellung von Kondensationsharzen ist seit langem bekannt. Derartige synthetische Harze können durch Polykondensation aus Ketonen wie z. B. Methylethylketon oder Acetophenon und Aldehyden wie z. B. Formaldehyd hergestellt werden. Nicht zuletzt wegen des Reaktionsschrittes der Aldolkondensation erfolgt die Reaktion gewöhnlich in wäßrigem Medium unter Einsatz einer Lauge wie z. B. Natronlauge als Katalysator. Es entsteht ein Reaktionsgemisch, aus dem nach Abschluß der Reaktion die über der Harzphase stehende wäßrige Phase, die den Großteil der Lauge enthält, abgetrennt wird. Ein geringerer Teil der Lauge verbleibt jedoch im Harz. Um das Harz von der Lauge zu befreien, wird das Harz zunächst von einem Lösemittel aufgenommen und die dadurch entstandene organische Phase mit Wasser extrahiert; auf diese Weise wird das Harz von der Lauge frei gewaschen. DE-33 24 287 A1 beschreibt beispielsweise den Einsatz von Methylenchlorid als Lösemittel für diesen Zweck. Die Extraktion führt jedoch dazu, daß hinterher das Harz und das Lösemittel wieder getrennt werden müssen. Ferner muß auch das Waschwasser aufgearbeitet werden, da es ein alkalisches Abwasser darstellt.

Zusammengefaßt weist das konventionelle Verfahren zur Herstellung katalysatorarmer Harze also folgende Probleme auf:
1. den Einsatz systemfremder Stoffe, die zum Schluß im Harz nicht verbleiben dürfen und auch wiedergewonnen werden müssen, wie z. B. den Einsatz eines Lösemittels,
2. mehrere aufwendige Verfahrensschritte (Grundoperationen) wie die Schritte der Extraktion, Rückgewinnung des Lösemittels und Aufarbeitung des Abwassers und
3. die potentielle ökologische Belastung durch die Lauge, falls das Abwasser nicht aufgearbeitet wird und die Lauge nicht in den Prozeß zurückgeführt wird.

Die Aufgabe der vorliegenden Erfindung bestand daher in der Bereitstellung eines Verfahrens zur Herstellung katalysatorarmer Kondensationsharze, das die obengenannten Probleme vermeidet und insbesondere ohne den Einsatz von prozeßfremden Hilfsstoffen wie Lösemitteln oder Reagenzien auskommt.

Die Aufgabe wurde erfindungsgemäß durch ein Verfahren zur Herstellung von katalysatorarmen Kondensationsharzen mittels Polykondensation in wäßrigem Medium in Gegenwart von basischen Katalysatoren aus Ketonen und Aldehyden gemäß Patentanspruch 1 gelöst, bei dem das auf an sich bekannte Weise erhaltene Harz in einem mit ionenselektiven, für die Laugeionen durchlässigen Membranen begrenzten Raum (im folgenden Zelle genannt) einem elektrischen Feld ausgesetzt wird und bei dem die Lauge(-ionen) durch die Membranen aus dem Harz abwandern. Das elektrische Feld dient also erfindungsgemäß als treibende Kraft für die Entfernung der Lauge aus dem Harz. Gegenstand der Erfindung ist daher insbesondere ein Verfahren zur Abtrennung von Lauge aus einem durch Polykondensation in wäßrigem Medium in Gegenwart von basischen Katalysatoren aus Ketonen und Aldehyden hergestellten Harz, bei dem das Harz in einem mit ionenselektiven, für die Laugeionen durchlässigen Membranen begrenzten Raum (Zelle) einem elektrischen Feld ausgesetzt wird und bei dem die Lauge(-ionen) durch die Membranen aus dem Harz abwandern.

Die erfindungsgemäßen Verfahren, die im folgenden auch als "Elektroextraktion" bezeichnet werden, ermöglichen es, daß das herstellungsbedingt mit Lauge behaftete Harz ohne den Einsatz systemfremder Hilfsmittel von der Lauge so weit wie möglich oder erwünscht befreit wird und daß die abgetrennte Lauge zugleich in reiner Form wiedergewonnen und vorzugsweise dem vorausgehenden Reaktionsschritt wieder zugeführt werden kann. Dadurch wird das Verfahren zur Herstellung laugenarmer Harze wesentlich vereinfacht, da die Verfahrensschritte zur Rückgewinnung des Lösemittels oder Aufarbeitung des Abwassers entfallen können. Durch das Rezirkulieren der Lauge werden ökologische Belastungen vermieden. Die Zugabe einer Säure zur Neutralisation des Waschwassers kann entfallen, wodurch auch der Ausstoß eines dabei anfallenden Neutralisationssalzes einschließlich der damit verbundenen Umweltbelastung unterbleibt.

Vorzugsweise wird die Lauge nach Abtrennung außerhalb der Zelle durch dort vorgelegte reine Lauge aufgenommen und auf diese Weise wiedergewonnen. Bevorzugt wird dieselbe Lauge vorgelegt, die auch im Harz enthalten ist. Von hier kann die Lauge dem Kondensationsprozeß vorzugsweise wieder zur Verfügung gestellt werden. Sowohl das erfindungsgemäße Abtrennen der Lauge als auch das Rückführen der Lauge können kontinuierlich oder diskontinuierlich erfolgen.

Die erfindungsgemäßen Verfahren können auch nachträglich auf konventionell hergestellte Harze angewendet werden, z. B. zum Zwecke der Nachreinigung. Die zu behandelnden Harze können hierzu bevorzugt in Wasser oder Lauge gelöst bzw. suspendiert werden.

Die erfindungsgemäßen Verfahren sind anwendbar auf alle durch Polykondensation in wäßrigem Medium in Gegenwart von basischen Katalysatoren aus Ketonen und Aldehyden hergestellten Harze. Besonders geeignet sind aber Harze aus Acetophenon bzw. seinem entsprechenden Derivat und Formaldehyd oder aus Cyclohexanon bzw. seinem entsprechenden Derivat und Formaldehyd.

Die erfindungsgemäßen Verfahren der Elektroextraktion können kontinuierlich oder diskontinuierlich auf elektrolytischem oder elektrodialytischem Weg ausgeführt werden. Die Stärke des angelegten elektrischen Feldes ist von den Ausführungsbedingungen abhängig und ist so zu bemessen, daß der erfindungsgemäße Effekt erzielt wird.

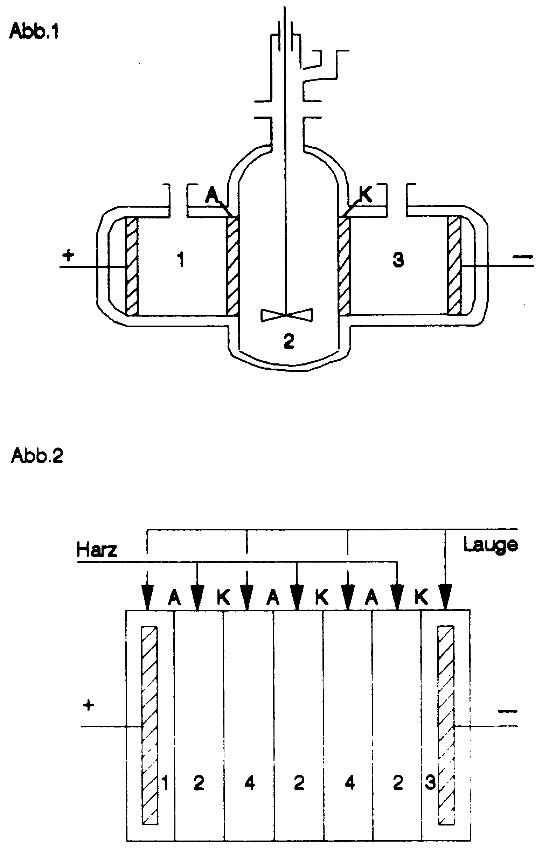

In der elektrolytischen Ausführungsart der Elektroextraktion wird eine ***Elektrolysezelle*** eingesetzt, in der zwischen die beiden Elektroden eine Kationenaustauschmembran K und eine Anionenaustauschmembran A angeordnet sind (Abb. 1). Dadurch entstehen drei Kammern. In der Anodenkammer 1 und der Kathodenkammer 3 wird vorzugsweise reine Lauge vorgelegt, die als Aufnehmer lösung für die aus dem Harz abzutrennende Lauge fungiert. Bevorzugt wird dieselbe Lauge vorgelegt, die auch im Harz enthalten ist. In der mittleren Kammer 2 befindet sich das Harz. Im Fall von z. B. Natronlauge als Lauge wandern im elektrischen Feld die Na⁺-Ionen durch die Kationenaustauschmembran in Richtung der Kathode (mit - gekennzeichnet) aus der Harzkammer 2 in das Katholyt in Kammer 3. Ebenfalls wandern die OH⁻-Ionen durch die Anionenaustauschmembran in Richtung der Anode (mit + gekennzeichnet) aus der Harzkammer in das Anolyt in Kammer 1. Aus den OH⁻-Ionen entstehen an der Anode Sauerstoff und Wasser. Im Katholyt entsteht in Anwesenheit der Na⁺-Ionen wieder Natronlauge unter Wasserstoffbildung. Das Harz verbleibt in der Harzkammer.

In einer weiteren Ausführungsart der Elektroextraktion wird das Prinzip der ***Elektrodialyse*** verwendet. Bei dieser Methode wird eine große Anzahl an Kationen- und Anionenaustauschmembranen zwischen die Elektroden eingeführt (Abb. 2). Je ein Paar dieser Membranen begrenzt eine Kammer. Die Kammern werden alternierend mit zu behandelndem Harz bzw. vorzugsweise Lauge beschickt, vgl. Abb. 2 mit den Harzkammern 2 und den Laugekammern 4. Bevorzugt wird wieder dieselbe Lauge vorgelegt, die auch im Harz enthalten ist. Im Fall von Natronlauge als Lauge wandern die Na⁺- und die OH⁻-Ionen aus den Harzkammern in die benachbarten Laugekammern. Ein Paar einer Harz- und Laugekammer stellt dabei für sich betrachtet eine funktionelle Einheit dar. Der Vorteil dieser Variante gegenüber der zuvor beschriebenen elektrolytischen Methode besteht darin, daß man mehrere solcher Einheiten zwischen die Elektroden einführen kann und durch parallele Beschickung mit Harz im selben elektrischen Feld eine größere Menge an Harz von Lauge befreien kann. Die Vorgänge in den Elektrodenkammern entsprechen denen bei elektrolytischer Verfahrensweise.

Auch die nach der Reaktion zur Herstellung des Harzes abgetrennte Wasserphase kann in analoger Weise behandelt werden, um die Lauge in reiner Form zurück zu gewinnen. Gegebenenfalls kann der Reaktoraustrag ohne Phasentrennung direkt der Elektroextraktion zugeführt werden, um die Lauge in einem Schritt zurückzugewinnen. Die Trennung Harz/Wasser kann dann nachträglich erfolgen.

Weitere Ausführungsarten der erfindungsgemäßen Verfahren sind denkbar, wie eine Integrierung der Membranzelle bzw. Membranzellen direkt in den Reaktor, in dem das Harz produziert wird. Nach der Herstellung kann das Harz ohne Entnahme gleich im Reaktor (versehen mit Membranen) durch Anlegen einer elektrischen Spannung von der Lauge befreit werden. Dem Fachmann erschließen sich in Kenntnis der erfindungsgemäßen Verfahren weitere Ausführungsformen.

Die erfindungsgemäßen Verfahren werden vorzugsweise bei Umgebungsdruck und bevorzugt bei Temperaturen zwischen 70 °C und 140 °C, besonders bevorzugt bei 90 °C bis 100 °C, durchgeführt.

Die erfindungsgemäßen Verfahren werden durch die folgenden Beispiele näher erläutert, ohne darauf beschränkt zu sein. In den Beispielen wird das Verfahren der Elektroextraktion anhand der Elektrolyse veranschaulicht, da diese auch die Grundlage der Ausführung als Elektrodialyse und weiterer Varianten darstellt.

### Beispiele

Das eingesetzte Rohharz aus Acetophenon und Formaldehyd enthielt noch 4,34 Gew.-% NaOH. Vor der Elektroextraktion wurde es mit Wasser verdünnt. Die Zelle, die für die Elektroextraktion verwendet wurde, bestand aus Glas und war mit zwei kreisförmigen Membranen versehen (s. Abb. 1, Kammer 2). Die Zelle hatte einen Rauminhalt von ca. 350 ml. Die Temperatur bei den Versuchen lag bei 95 °C. Die Spannung lag anfänglich bei 20 bis 60 V. Im Laufe der Versuche wurde sie auf 150 V erhöht. Weitere Einzelheiten werden in der Tabelle wiedergegeben.

**Tabelle**

| Daten der Elektrolysezelle | |
|---|---|
| Anode | aus platiniertem Titan |
| Kathode | aus Stahl |
| Membrandurchmesser | 40 mm |
| Membranfläche (je Membran) | 12,5 cm² |
| Abstand zwischen den Membranen | 130 mm |
| Abstand zwischen einer Elektrode und einer Membran | 30 mm |

### Beispiel 1:

Als Kationenaustauschmembran diente eine Membran vom Typ C66-10F und als Anionenaustauschmembran eine Membran vom Typ ACLE-5P, beide von der Fa. TOKUYAMA SODA Corp.. In den Elektrodenkammern wurde eine 1 - 3 Gew.-%ige Natronlauge vorgelegt. Das Harz wurde durch einen Blattrührer aus Glas verrührt. Es wurden 320 g einer 11,1 Gew.-%igen Harzsuspension 32 h lang behandelt. Am Ende verblieben im wasserfreien (getrockneten) Harz nur noch 15 Gew.-ppm NaOH.

### Beispiel 2:

Der Versuch verlief wie im Beispiel 1. Es wurden 240 g einer 5,3 Gew.-%igen Harzsuspension 6 h lang behandelt. Am Ende verblieben im wasserfreien (getrockneten) Harz nur noch 70 Gew.-ppm NaOH.

### Beispiel 3:

Der Versuch verlief wie im Beispiel 1, aber als Kationenaustauschmembran diente eine Membran vom Typ CMB und als Anionenaustauschmembran eine Membran vom Typ AHA, beide von der Fa. TOKUYAMA SODA Corp. Es wurden 264 g einer 6,3 Gew.-%igen Harzsuspension 6 h lang behandelt. Am Ende konnte im wasserfreien (getrockneten) Harz kein NaOH mehr nachgewiesen werden (Nachweisbarkeitsgrenze 10 Gew.-ppm NaOH).

## Patentansprüche

1. Verfahren zur Herstellung von katalysatorarmen Kondensationsharzen aus Ketonen und Aldehyden mittels Polykondensation in wäßrigem Medium in Gegenwart von basischen Katalysatoren,
dadurch gekennzeichnet,
daß das auf an sich bekannte Weise erhaltene Harz in einem mit ionenselektiven, für die Laugeionen durchlässigen Membranen begrenzten Raum (Zelle) einem elektrischen Feld ausgesetzt wird und die Lauge(-ionen) durch die Membranen aus dem Harz abwandern.

2. Verfahren zur Abtrennung von Lauge aus Kondensationsharzen, die mittels Polykondensation in wäßrigem Medium in Gegenwart von basischen Katalysatoren aus Ketonen und Aldehyden hergestellt sind,
dadurch gekennzeichnet,
daß das Harz in einem mit ionenselektiven, für die Laugeionen durchlässigen Membranen begrenzten Raum (Zelle) einem elektrischen Feld ausgesetzt wird und die Lauge(-ionen) durch die Membranen aus dem Harz abwandern.

3. Verfahren nach Anspruch 1 oder 2,
dadurch gekennzeichnet,
daß das Harz in Wasser bzw. Lauge gelöst bzw. suspendiert wird.

4. Verfahren nach zumindest einem der vorherigen Ansprüche,
dadurch gekennzeichnet, daß die Abtrennung der Lauge bei 70 bis 140 °C erfolgt.

5. Verfahren nach zumindest einem der vorherigen Ansprüche,
dadurch gekennzeichnet, daß die Abtrennung der Lauge bei 90 bis 100 °C erfolgt.

6. Verfahren nach zumindest einem der vorherigen Ansprüche,
dadurch gekennzeichnet,
daß die abgetrennte Lauge außerhalb der Zelle durch dort vorgelegte reine Lauge aufgenommen, auf diese Weise wiedergewonnen und wieder dem Reaktionsschritt zur Verfügung gestellt wird.

7. Verfahren nach zumindest einem der vorherigen Ansprüche,
dadurch gekennzeichnet,
daß die Abtrennung oder die Rückführung der Lauge oder beides kontinuierlich oder diskontinuierlich erfolgen.

8. Verfahren nach zumindest einem der vorherigen Ansprüche,
dadurch gekennzeichnet,
daß die Abtrennung der Lauge elektrolytisch oder elektrodialytisch erfolgt.

9. Verfahren nach zumindest einem der Ansprüche 1 bis 8 zur Abtrennung der Lauge aus einem Harz, das aus Acetophenon oder seinem entsprechenden Derivat und Formaldehyd hergestellt ist.

10. Verfahren nach zumindest einem der Ansprüche 1 bis 8 zur Abtrennung der Lauge aus einem Harz, das aus Cyclohexanon oder seinem entsprechenden Derivat und Formaldehyd hergestellt ist.
